# EUROPÄISCHE PATENTSCHRIFT

(11) **EP 3 317 069 B1**
(45) Veröffentlichungstag und Bekanntmachung des Hinweises auf die Patenterteilung: **06.09.2023**
(21) Anmeldenummer: 16738086.4
(22) Anmeldetag: 29.06.2016
(51) Int. Cl.: B29C 35/08, B29D 99/00, B29C 35/02

(54) **VERFAHREN ZUM HERSTELLEN EINES WINDENERGIEANLAGEN-ROTORBLATTES UND WINDENERGIEANLAGEN-ROTORBLATT**
METHOD FOR PRODUCING A WIND TURBINE ROTOR BLADE, AND WIND TURBINE ROTOR BLADE
PROCÉDÉ DE FABRICATION D'UNE PALE DE ROTOR D'ÉOLIENNE ET PALE DE ROTOR D'ÉOLIENNE

(30) Priorität: 01.07.2015 DE 102015212268
(43) Veröffentlichungstag der Anmeldung: 09.05.2018
(73) Patentinhaber: Wobben Properties GmbH, 26607 Aurich (DE)
(72) Erfinder: THEILE, Benjamin, 94036 Passau (DE); HOFFMANN, Alexander, 26721 Emden (DE)
(74) Vertreter: Eisenführ Speiser
(86) Internationale Anmeldenummer: PCT/EP2016/065180
(87) Internationale Veröffentlichungsnummer: WO 2017/001503

(56) Entgegenhaltungen:
- EP-A1- 2 607 075
- EP-A2- 2 133 235
- DE-A1-102008 055 478
- US-A1- 2009 127 253
- US-A1- 2010 065 552
- US-A1- 2014 030 093

## Beschreibung

Die vorliegende Erfindung betrifft ein Verfahren zum Herstellen eines Windenergieanlagen-Rotorblattes sowie ein Windenergieanlagen-Rotorblatt.

Ein Windenergieanlagen-Rotorblatt weist eine Rotorblattwurzel und eine Rotorblattspitze auf. Die Rotorblattwurzel ist typischerweise dicker ausgestaltet, weil sie Befestigungsmittel wie beispielsweise Gewindestangen oder dergleichen aufnehmen muss, damit das Rotorblatt mittels der Befestigungsmittel an einer Rotornabe oder einem Blattadapter befestigt werden kann. Um eine ausreichende Festigkeit der Befestigungsmittel in dem Rotorblattwurzelbereich vorzusehen, muss der Bereich der Rotorblattwurzel erheblich dicker bzw. mit mehr Material ausgestaltet sein als der restliche Bereich des Rotorblattes. Das Material der Rotorblätter ist typischerweise GFK oder CFK mit einem Epoxidharz. Bei der Herstellung bzw. Produktion der Rotorblätter und insbesondere der Rotorblattwurzel wird zur Temperierung bzw. Erwärmung der Klebeflächen bzw. des Epoxidharzes viel Energie und Zeit benötigt. Verfahren zum Herstellen eines Windenergieanlagen-Rotorblattes und Windenergieanlagen-Rotorblätter sind bekannt aus US2014030093 A1 und EP2607075 A1.

In der prioritätsbegründenden deutschen Patentanmeldung hat das Deutsche Patent- und Markenamt die folgenden Dokumente recherchiert: DE 10 2008 055 478 A1, DE 10 2009 028 613 A1 und US 2010/0065552 A.

DE 10 2008 055 478 A1 zeigt ein Verfahren zum Herstellen eines Rotorblattes einer Windenergieanlage mit einem glasfaserverstärkten Kunststoff. Metallteilchen werden in die Matrix gemischt.

EP 2 133 235 A3 zeigt eine Vorrichtung zum Befestigen einer Lampenleuchteinheit an einem Fahrzeug.

US 2009/127253 A1 zeigt eine temperaturgeregelte Induktionserwärmung von polymeren Materialien.

US 2010/065552 A1 beschreibt ein Verfahren zum Herstellen von thermoplastischen Komponenten unter Verwendung einer induktiven Erwärmung.

Es ist damit Aufgabe der vorliegenden Erfindung, ein Verfahren zum Herstellen eines Windenergieanlagen-Rotorblattes, welches energieeffizienter und schneller erfolgen kann, sowie ein entsprechendes Rotorblatt vorzusehen.

Diese Aufgabe wird durch ein Verfahren zum Herstellen eines Windenergieanlagen-Rotorblattes gemäß Anspruch 1 sowie durch ein Windenergieanlagen-Rotorblatt nach Anspruch 5 gelöst.

Somit wird ein Verfahren zum Herstellen eines Windenergieanlagen-Rotorblattes vorgesehen. Hierzu erfolgt ein Mischen von Metallteilchen, Metallpulver oder Metallspänen in eine Matrix, welche zur Herstellung des Rotorblattes verwendet wird. Dann erfolgt ein induktives Erwärmen der Matrix mit den Metallteilchen, Metallpulver oder Metallspänen zur Aushärtung der Matrix in mindestens einem Abschnitt des Windenergieanlagen-Rotorblattes.

Das Windenergieanlagen-Rotorblatt weist einen ersten und einen zweiten Abschnitt auf, wobei der zweite Abschnitt um den ersten Abschnitt herum angeordnet ist. Die Matrix mit dem Metallpulver, den Metallteilchen oder der Metallspäne ist zwischen dem ersten und zweiten Abschnitt vorgesehen. Der erste und zweite Abschnitt sind insbesondere im Bereich der Rotorblattwurzel vorgesehen.

Das Rotorblatt weist Kunststofffasern (Glasfaser oder Kohlenstofffasern) und eine Matrix auf, welche typischerweise ein Harz wie beispielsweise Epoxidharz ist. Die Matrix ist somit Bestandteil des Rotorblattes.

Das Rotorblatt der Windenergieanlage weist glasfaserverstärkten Kunststoff GFK und/oder kohlenfaserverstärkten Kunststoff CFK auf, welche in eine Matrix (Harz, Epoxidharz) eingebunden sind. Bei der Produktion des Rotorblattes muss das Harz ausgehärtet werden. Erfindungsgemäß erfolgt dies durch Hinzufügen von Metallteilchen, Metallpulver oder Metallspäne in die Matrix des Rotorblattes sowie durch ein induktives Erwärmen der Matrix mit den Metallteilchen, Metallpulver oder Metallspänen. Dies ist vorteilhaft, weil damit eine gleichmäßige Erwärmung (von innen heraus) der Matrix erreicht wird, um die Matrix auszuhärten.

Gemäß einem Aspekt der vorliegenden Erfindung weist die Matrix Epoxidharz auf. Optional kann der Anteil des Metallpulvers, der Metallteilchen oder der Metallspäne 5 bis 20 Gewichtsprozent der Matrix betragen.

Gemäß der Erfindung wird eine induktive Erwärmung der sich in der Matrix befindlichen Metallteilchen, Metallpulver oder Metallspäne vorgesehen, um eine gleichmäßige Erwärmung des Rotorblattes zur Aushärtung der Matrix zur Verfügung zu stellen. Dies ist vorteilhaft, weil damit die Produktionszeit verkürzt werden kann, da Wärme auch im Inneren des Rotorblattes entsteht.

Gemäß einem weiteren Aspekt der vorliegenden Erfindung ist die Matrix (oder der Klebstoff) mit den Metallteilchen, dem Metallpulver oder den Metallspänen im Bereich der Rotorblattwurzel vorgesehen und die Matrix (oder der Klebstoff) wird im Bereich der Rotorblattwurzel einem durch eine Induktionsspule erzeugten Induktionsfeld ausgesetzt, so dass die Metallteilchen, das Metallpulver oder die Metallspäne induktiv erwärmt werden und die Wärme an die umgebende Matrix (oder den umgebenden Klebstoff) abgeben.

Die Erfindung betrifft ebenfalls ein Windenergieanlagen-Rotorblatt mit einer Rotorblattwurzel, einer Rotorblattspitze und einer Matrix im Bereich der Rotorblattwurzel. Die Matrix weist Metallpulver, Metallteilchen oder Metallspäne auf. Der Anteil des Metallpulvers, der Metallteilchen oder der Metallspäne beträgt 5 bis 20 Gewichtsprozent der Matrix.

Gemäß einem Aspekt der vorliegenden Erfindung werden Metallpulver oder Metallspäne in den Klebstoff eingebracht oder gemischt, welcher für die Verklebung im Bereich der Rotorblattwurzel verwendet wird. Durch Verwendung von Induktionsspulen kann das Metallpulver bzw. die Metallspäne im Klebstoff und damit in der Rotorblattwurzel erwärmt werden, so dass der Klebstoff und die Rotorblattwurzel erwärmt wird, um eine Temperung der Klebeflächen zu ermöglichen. Somit kann eine aktive Erwärmung der Rotorblattwurzel ermöglicht werden. Ferner ist es somit möglich, dass nur der Klebstoff erwärmt bzw. ausgehärtet wird.

Gemäß der Erfindung wird somit ein induktives Erwärmen oder Heizen einer Matrix vorgeschlagen, welche bei der Produktion bzw. Herstellung eines Windenergieanlagen-Rotorblattes verwendet wird. Insbesondere wird vorgeschlagen, eine Matrix im Bereich der Rotorblattwurzel (und damit auch die von der umgebenden Glasfaser und/oder Kohlefasern) induktiv zu erwärmen. Die Matrix kann beispielsweise Epoxidharz darstellen. Der Matrix werden Metallpulver und/oder Metallspäne beigemengt. Bei einer induktiven Erwärmung wird das Metall warm und gibt die Wärme an die Matrix ab, so dass auch die Matrix erwärmt wird. Dies hat insbesondere den Vorteil, dass die Entstehung der Wärme und damit die Wärmequelle sich innerhalb der Matrix befindet und die Wärme somit nicht ausschließlich von außen zugeführt werden muss, so dass eine gleichmäßigere Erwärmung erfolgt.

Gemäß einem Aspekt der vorliegenden Erfindung kann ein Anteil von Metallpulver oder Metallspäne in der Matrix 5 bis 20 Gewichtsprozent betragen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Windenergieanlagen-Rotorblattes,
- Fig. 3: zeigt eine schematische Darstellung einer Rotorblattwurzel eines Windenergieanlagen-Rotorblattes während der Herstellung des Rotorblattes, und
- Fig. 4: zeigt einen Querschnitt durch eine Rotorblattwurzel eines Rotorblattes gemäß der Erfindung.

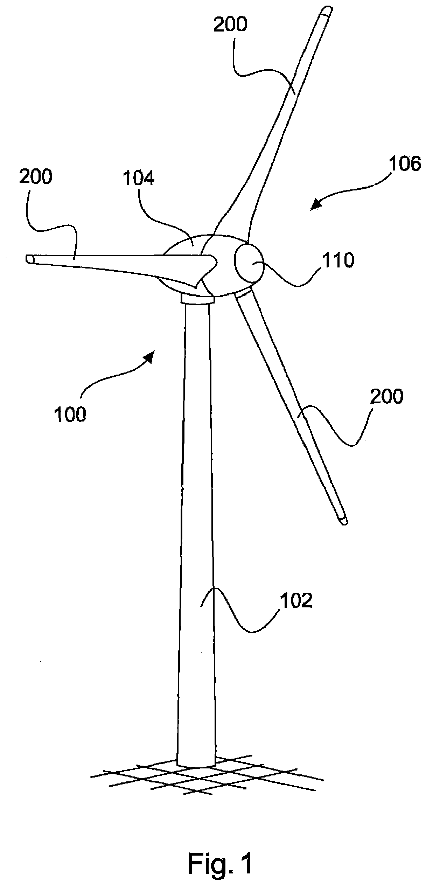

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

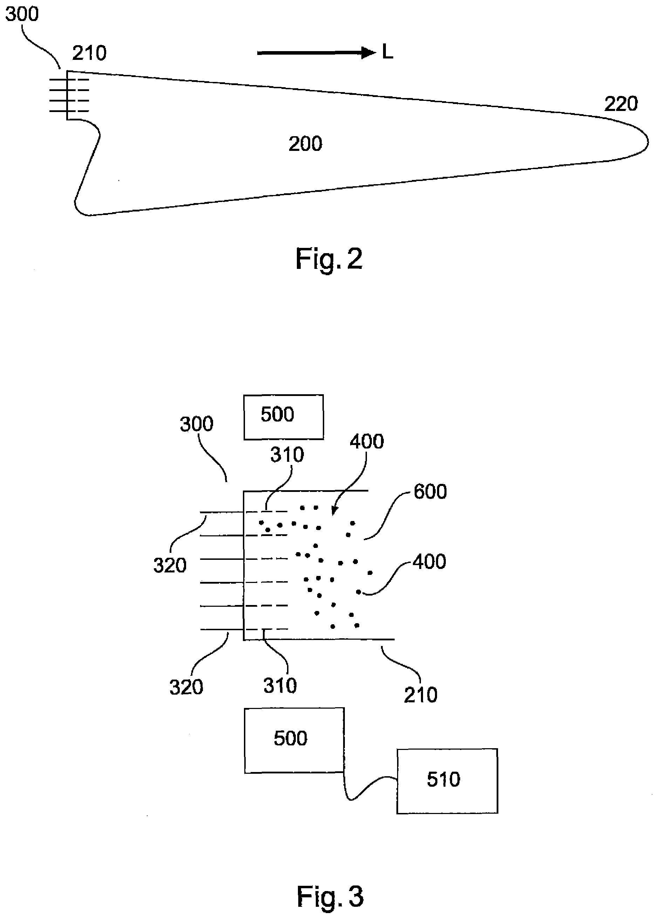

Fig. 2 zeigt eine schematische Darstellung eines Windenergieanlagen-Rotorblattes. Das Rotorblatt 200 weist eine Rotorblattwurzel 210 und eine Rotorblattspitze 220 auf und erstreckt sich entlang einer Längsrichtung L. Das Rotorblatt wird aus glasfaserverstärktem Kunststoff GFK und/oder kohlefaserverstärktem Kunststoff CFK mit einer Matrix (z. B. Epoxidharz) hergestellt. Im Bereich der Rotorblattwurzel 210 sind Befestigungseinheiten 300 vorgesehen, welche mit ihrem ersten Ende in den Rotorblattwurzelbereich hineinragen und mit ihrem zweiten Ende an einer Rotornabe einer Windenergieanlage befestigt werden können.

Fig. 3 zeigt eine schematische Darstellung einer Rotorblattwurzel eines Windenergieanlagen-Rotorblattes während der Herstellung des Rotorblattes. Insbesondere im Bereich der Rotorblattwurzel 210 können in dem Material bzw. der Matrix 600 der Rotorblattwurzel 210 Metallpulver oder Metallspäne bzw. Metallteilchen 400 vorgesehen sein. Ferner ist im Bereich der Rotorblattwurzel eine Mehrzahl von Befestigungseinheiten 300 vorgesehen, welche mit ihrem ersten Ende 310 in den Rotorblattwurzelbereich 210 hineinragen und mit ihrem zweiten Ende 320 aus der Rotorblattwurzel 210 herausragen. Die Rotorblattwurzel 210 wird im Bereich einer Induktionsspule 500 platziert und die Induktionsspule 500 wird mittels einer Energieversorgung 510 mit Strom/Spannung versorgt, um ein Induktionsfeld aufzubauen. Dieses Induktionsfeld führt dazu, dass die Metallteilchen, Metallpulver bzw. Metallspäne 400 in der Matrix 600 der Rotorblattwurzel 210 induktiv erwärmt werden. Die Metallteilchen 400 geben die Wärme an die umliegende Matrix 600 ab, so dass die Matrix 600 im Bereich der Rotorblattwurzel 210 erwärmt wird, so dass der verwendete Klebstoff durchgehärtet werden kann und getempert werden kann.

Gemäß einem Ausführungsbeispiel der Erfindung werden die Metallteilchen, das Metallpulver bzw. die Metallspäne 400 in dem Rotorblatt 200 vorgesehen. Optional kann der Anteil der Metallteilchen in der Matrix 5 bis 20 Gewichtprozent betragen.

Die Metallteilchen 400 können in dem durch die Induktionsspule 500 erzeugten Induktionsfeld erwärmt werden. Damit kann ein aktives Erwärmen insbesondere der Rotorblattwurzel 210 erreicht werden.

Durch das Vorhandensein der Metallteilchen 400 in der Matrix 600 des Rotorblattes 200 kann es dazu kommen, dass das Material in diesem Bereich leitfähig wird. Wenn dies der Fall ist, dann muss ein ausreichender Blitzschutz gewährleistet werden, da ansonsten das Rotorblatt im Falle eines Blitzeinschlags geschädigt werden kann.

Gemäß einem Aspekt der vorliegenden Erfindung wird das Metallpulver 400 lediglich im Bereich der Rotorblattwurzel 210 vorgesehen, welches sich typischerweise in dem montierten Zustand des Rotorblattes innerhalb der Gondel befindet. Die Gondel der Windenergieanlage kann hier als ein faradayscher Käfig wirken, so dass die Verwendung von Metallteilchen in der Matrix 600 der Rotorblattwurzel 210 sich nicht nachteilig auf die Blitzschutzfähigkeit der Windenergieanlage auswirkt.

Insbesondere bei sehr dicken Teilen ist die Verwendung von Metallteilchen in der Matrix des Rotorblattes vorteilhaft, da eine schnellere und gleichmäßigere Erwärmung ermöglicht werden kann.

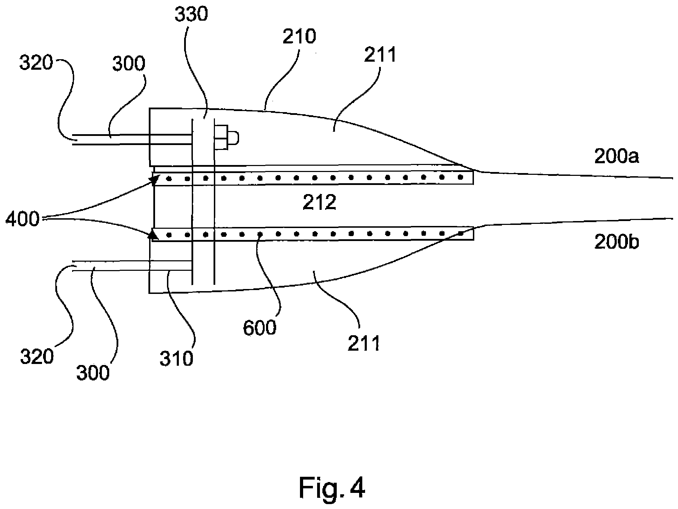

Fig. 4 zeigt einen Querschnitt durch eine Rotorblattwurzel eines Rotorblattes gemäß der Erfindung. Die Rotorblattwurzel 210 kann einen mittleren Abschnitt 212 sowie einen weiteren Abschnitt 211 um den Abschnitt 212 herum aufweisen. Der Abschnitt211 kann als eine GFK (Glasfaser-verstärkter Kunststoff)-Aufdickung ausgestaltet sein. Optional kann ein zu verklebender Abschnitt zwischen den beiden Abschnitten 211, 212 vorgesehen sein. In diesen Bereichen ist die Matrix bzw. der Klebstoff 600 mit Metallteilchen, Metallpulver 400 oder dergleichen versehen. Um die Abschnitte 211, 212 miteinander zu verkleben, wird die Rotorblattwurzel 210 wie in Fig. 3 gezeigt in einem Induktionsfeld platziert, so dass sich die Metallteilchen 400 erwärmen und die Verklebung durchhärten kann.

In Fig. 4 ist ein Bereich 200a außerhalb des Rotorblattes und ein Bereich 200b innerhalb des Rotorblattes gezeigt. Die Rotorblattwurzel ist vorzugsweise rotationssymmetrisch ausgestaltet.

Das Rotorblatt der Windenergieanlage weist glasfaserverstärkten Kunststoff GFK und/oder kohlenfaserverstärkten Kunststoff CFK auf, welche in eine Matrix (Harz, Epoxidharz) eingebunden sind. Bei der Produktion des Rotorblattes muss das Harz ausgehärtet werden.

Erfindungsgemäß erfolgt dies durch Hinzufügen von Metallteilchen, Metallpulver oder Metallspäne in die Matrix des Rotorblattes sowie durch ein induktives Erwärmen der Matrix mit den Metallteilchen, Metallpulver oder Metallspänen. Dies ist vorteilhaft, weil damit eine gleichmäßige Erwärmung (von innen heraus) der Matrix erreicht wird, um die Matrix auszuhärten.

## Patentansprüche

1. Verfahren zum Herstellen eines Windenergieanlagen-Rotorblattes (200), welches glasfaserverstärkten Kunststoff und/oder kohlenstofffaserverstärkten Kunststoff gebunden in einer Matrix (600) aufweist, mit den Schritten:
Mischen von Metallteilchen, Metallpulver oder Metallspänen (400) in die Matrix (600), und
Aushärten der Matrix (600) in mindestens einem Abschnitt des Windenergieanlagen-Rotorblattes (200) durch induktives Erwärmen der Matrix (600) mit den Metallteilchen, Metallpulver oder Metallspänen (400),
**dadurch gekennzeichnet, dass** das Windenergieanlagen-Rotorblatt (200) einen ersten Abschnitt (212) und einen zweiten Abschnitt (211) aufweist, wobei der zweite Abschnitt (211) um den ersten Abschnitt (212) herum angeordnet ist, und
wobei die Matrix (600) mit dem Metallpulver, den Metallteilchen oderder Metallspäne (400) zwischen dem ersten und zweiten Abschnitt (212, 211) vorgesehen ist.

2. Verfahren nach Anspruch 1, wobei
der Anteil des Metallpulvers, der Metallteilchen oder der Metallspäne (400) 5 bis 20 Gewichtsprozent der Matrix (600) beträgt.

3. Verfahren nach Anspruch 1 oder 2, wobei
die Matrix (600) mit den Metallteilchen, Metallpulver oder Metallspänen (400) im Bereich der Rotorblattwurzel (210) vorgesehen ist und die Matrix (600) im Bereich der Rotorblattwurzel (210) einem durch eine Induktionsspule (500) erzeugten Induktionsfeld ausgesetzt wird, so dass die Metallteilchen, Metallpulver oder Metallspäne (400) induktiv erwärmt werden und die Wärme an die umgebende Matrix abgeben.

4. Verfahren nach einem der Ansprüche 1 bis 3, wobei
die Matrix (600) Harz oder Epoxidharz aufweist.

5. Windenergieanlagen-Rotorblatt (200), mit
einer Rotorblattwurzel (210), einer Rotorblattspitze (220),
glasfaserverstärktem Kunststoff und/oder kohlestofffaserverstärktem Kunststoff, gebunden in einer Matrix (600) zumindest im Bereich der Rotorblattwurzel (210),
wobei die Matrix (600) Metallpulver, Metallteilchen oder Metallspäne (400) aufweist,
**dadurch gekennzeichnet, dass** das Windenergieanlagen-Rotorblatt (200) einen ersten Abschnitt (212) und einen zweiten Abschnitt (211) aufweist, wobei der zweite Abschnitt (211) um den ersten Abschnitt (212) herum angeordnet ist, und
wobei die Matrix (600) mit dem Metallpulver, den Metallteilchen oder der Metallspäne (400) zwischen dem ersten und zweiten Abschnitt (212, 211) vorgesehen ist.

6. Windenergieanlagen-Rotorblatt (200) nach Anspruch 5,
wobei der Anteil des Metallpulvers, der Metallteilchen oder der Metallspäne (400) 5 bis 20 Gewichtsprozent der Matrix (600) beträgt.

## Claims

1. A method of producing a wind turbine rotor blade (200) which has glass fibre-reinforced plastic and/or carbon fibre-reinforced plastic bound in a matrix (600), comprising the steps:
mixing metal particles, metal powder or metal chips (400) into the matrix (600), and
hardening the matrix (600) ) in at least one portion of the wind turbine rotor blade (200) by inductively heating the matrix (600) with the metal particles, metal powder or metal chips (400),
**characterized in that** the wind turbine rotor blade (200) has a first portion (212) and a second portion (211), the second portion (211) being arranged around the first portion (212), and
wherein the matrix (600) with the metal powder, the metal particles or the metal chips (400) is provided between the first and second portions (212, 211).

2. A method according to claim 1 wherein
the proportionn of the metal powder, the metal particles or the metal chips (400) is between 5 and 20 percent by weight of the matrix (600).

3. A method according to claim 1 or claim 2 wherein
the matrix (600) with the metal particles, metal powder or metal chips (400) is provided in the region of the rotor blade root (210) and in the region of the rotor blade root (210) the matrix (600) is exposed to an induction field generated by an induction coil (500) so that the metal particles, metal powder or metal chips (400) are inductively heated and give off the heat to the surrounding matrix.

4. A method according to one of claims 1 to 3 wherein
the matrix (600) has resin or epoxy resin.

5. A wind turbine rotor blade (200) comprising
a rotor blade root (210), a rotor blade tip (220), glass fibre-reinforced plastic and/or carbon fibre-reinforced plastic bound in a matrix (600) at least in the region of the rotor blade root (210),
wherein the matrix (600) has metal powder, metal particles or metal chips (400),
**characterized in that** the wind turbine rotor blade (200) has a first portion (212) and a second portion (211), the second portion (211) being arranged around the first portion (212), and
wherein the matrix (600) with the metal powder, the metal particles or the metal chips (400) is provided between the first and second portions (212, 211).

6. A wind turbine rotor blade (200) according to claim 5
wherein the proportion of the metal powder, the metal particles or the metal chips (400) is between 5 and 20 percent by weight of the matrix (600).

## Revendications

1. Procédé de fabrication d'une pale de rotor d'éolienne (200), laquelle présente une matière synthétique renforcée par des fibres de verre et/ou une matière synthétique renforcée par des fibres de carbone liées dans une matrice (600), avec les étapes :
de mélange de particules métalliques, de poudre métallique ou de copeaux métalliques (400) dans la matrice (600), et
de durcissement de la matrice (600) dans au moins une section de la pale de rotor d'éolienne (200) en chauffant par induction la matrice (600) avec les particules métalliques, la poudre métallique ou les copeaux métalliques (400),
**caractérisé en ce que**
la pale de rotor d'éolienne (200) présente une première section (212) et une deuxième section (211), dans lequel la deuxième section (211) est disposée tout autour de la première section (212), et
dans lequel la matrice (600) avec la poudre métallique, les particules métalliques ou les copeaux métalliques (400) est prévue entre la première et la deuxième section (212, 211).

2. Procédé selon la revendication 1, dans lequel
la proportion de la poudre métallique, des particules métalliques ou des copeaux métalliques (400) va de 5 à 20 % en poids de la matrice (600).

3. Procédé selon la revendication 1 ou 2, dans lequel
la matrice (600) avec les particules métalliques, la poudre métallique ou les copeaux métalliques (400) est prévue dans la zone de la racine de pale de rotor (210), et la matrice (600) est exposée à un champ d'induction générée par la bobine d'induction (500) dans la zone de la racine de pale de rotor (210) de sorte que les particules métalliques, la poudre métallique ou les copeaux métalliques (400) sont chauffés par induction et envoient la chaleur à la matrice qui les entoure.

4. Procédé selon l'une quelconque des revendications 1 à 3, dans lequel
la matrice (600) présente de la résine ou de la résine époxy.

5. Pale de rotor d'éolienne (200) avec
une racine de pale de rotor (210), une pointe de pale de rotor (220),
de la matière synthétique renforcée par des fibres de verre et/ou de la matière synthétique renforcée par des fibres de carbone, liées dans une matrice (600) au moins dans la zone de la racine de pale de rotor (210),
dans laquelle la matrice (600) présente de la poudre métallique, des particules métalliques ou des copeaux métalliques (400),
**caractérisée en ce que**
la pale de rotor d'éolienne (200) présente une première section (212) et une deuxième section (211), dans laquelle la deuxième section (211) est disposée tout autour de la première section (212), et
dans laquelle la matrice (600) avec la poudre métallique, les particules métalliques ou les copeaux métalliques (400) est prévue entre la première et la deuxième section (212, 211).

6. Pale de rotor d'éolienne (200) selon la revendication 5,
dans laquelle la proportion de la poudre métallique, des particules métalliques ou des copeaux métalliques (400) va de 5 à 20 % en poids de la matrice (600).
